(19) **Europäisches Patentamt / European Patent Office / Office européen des brevets**

(11) **EP 1 910 106 B1**

(12) **FASCICULE DE BREVET EUROPEEN**

(45) Date de publication et mention
de la délivrance du brevet:
**22.09.2010 Bulletin 2010/38**

(21) Numéro de dépôt: **06754640.8**

(22) Date de dépôt: **30.06.2006**

(51) Int Cl.:
**B60C 23/04** *(2006.01)*

(86) Numéro de dépôt international:
**PCT/EP2006/006398**

(87) Numéro de publication internationale:
**WO 2007/014609 (08.02.2007 Gazette 2007/06)**

(54) **PROCEDE DE TRANSMISSION D'UN SIGNAL ELECTROMAGNETIQUE DE REQUETE D'IDENTIFICATION A DESTINATION D'UN BOITIER ELECTRONIQUE MONTE SUR UNE ROUE D'UN VEHICULE**

VERFAHREN ZUR ÜBERTRAGUNG EINES ELEKTROMAGNETISCHEN IDENTIFIKATIONSANFRAGESIGNALS AUF EINE AN EINEM FAHRZEUGRAD ANGEBRACHTE ELEKTRONISCHE EINHEIT

METHOD FOR TRANSMITTING AN IDENTIFICATION REQUEST ELECTROMAGNETIC SIGNAL TO AN ELECTRONIC UNIT MOUNTED ON A VEHICLE WHEEL

(84) Etats contractants désignés:
**DE ES GB IT**

(30) Priorité: **04.08.2005 FR 0508311**

(43) Date de publication de la demande:
**16.04.2008 Bulletin 2008/16**

(73) Titulaire: **Continental Automotive France**
**31036 Toulouse Cedex 1 (FR)**

(72) Inventeur: **COSTES, Olivier**
**F-31270 Cugnaux (FR)**

(56) Documents cités:
**EP-A- 1 536 392    FR-A- 2 865 589**

# Description

L'invention concerne un procédé de transmission d'un signal électromagnétique de requête d'identification généré au moyen d'une antenne connectée à une unité centrale montée sur un véhicule, à destination d'un boîtier électronique monté sur une roue du dit véhicule.

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques équipant ces roues, et destinés à informer le conducteur de toute variation anormale du paramètre mesuré. La demande de brevet FR 2 865 589 décrit par exemple un tel système.

Ces systèmes de surveillance sont classiquement dotés d'un boîtier électronique, monté sur chacune des roues du véhicule, comportant, un microprocesseur et un émetteur radiofréquence (ou émetteur RF), et d'une unité centrale de réception des signaux émis par les émetteurs, comportant un calculateur intégrant un récepteur radiofréquence (ou récepteur RF) connecté à une antenne.

Un des problèmes que nécessitent de résoudre de tels systèmes de surveillance réside dans l'obligation de devoir associer à chaque signal reçu par le récepteur de l'unité centrale, une information concernant la localisation du capteur et donc de la roue à l'origine de ce signal, cette obligation perdurant pendant la durée de vie du véhicule, c'est à dire devant être respectée même après des changements de roues ou plus simplement des inversions de la position de ces roues.

A l'heure actuelle, une première méthode de localisation consiste à utiliser trois antennes basse fréquence positionnées chacune à proximité immédiate d'une des roues du véhicule, et à effectuer une procédure de localisation consistant à exciter successivement chacune de ces trois antennes par l'émission d'un champ magnétique basse fréquence.

Selon cette procédure, le capteur monté sur la roue située à proximité de l'antenne excitée commande, en réponse et à destination de l'unité centrale, l'émission d'un signal basse fréquence comportant un code d'identification du dit capteur, de sorte que l'excitation successive des trois antennes conduit à la localisation des trois capteurs montés sur les roues jouxtant ces antennes, et par déduction, à la localisation du quatrième capteur.

Le principal avantage d'un tel procédé réside dans le fait que la procédure de localisation est très rapide et conduit à une localisation quasi-instantanée après le démarrage du véhicule.

Par contre, cette solution impose d'équiper le véhicule de trois antennes avec toutes les sujétions afférentes : câbles de connexion, amplificateurs de commande..., de sorte qu'elle s'avère coûteuse.

Cet inconvénient relatif au coût d'installation des moyens de mise en oeuvre du procédé de localisation peut être résolu lorsque le véhicule est équipé d'un dispositif d'accès mains libres destiné à permettre d'accéder au dit véhicule et de démarrer ce dernier.

En effet, la solution consiste alors, tel que notamment décrit dans la demande de brevet WO 02/051654, à utiliser les antennes émettrices de ce dispositif d'accès mains libres déjà montées sur le véhicule, pour mettre en oeuvre la procédure de localisation des roues.

Tel que décrit dans la demande de brevet précitée, la mise en oeuvre de cette solution consiste, par exemple, à commander l'émission par les antennes émettrices d'un signal non codé lorsque les dites antennes sont utilisées en vue de la localisation des roues, et à commander l'émission d'un signal codé lors de l'utilisation des antennes à leur fin originale de contrôle de l'accès au véhicule.

Une telle solution s'avère toutefois présenter un inconvénient majeur résultant du fait que les antennes des dispositifs d'accès mains libres ne sont pas positionnées de façon idéale en vue de permettre la localisation des roues d'un véhicule.

En effet, le positionnement des antennes, conçu pour optimiser le fonctionnement du système d'accès mains libres, conduit à la création, lors de la rotation des roues et donc des boîtiers électroniques équipant ces dernières, de zones angulaires de non réception, par ces boîtiers électroniques, des signaux émis par ces antennes.

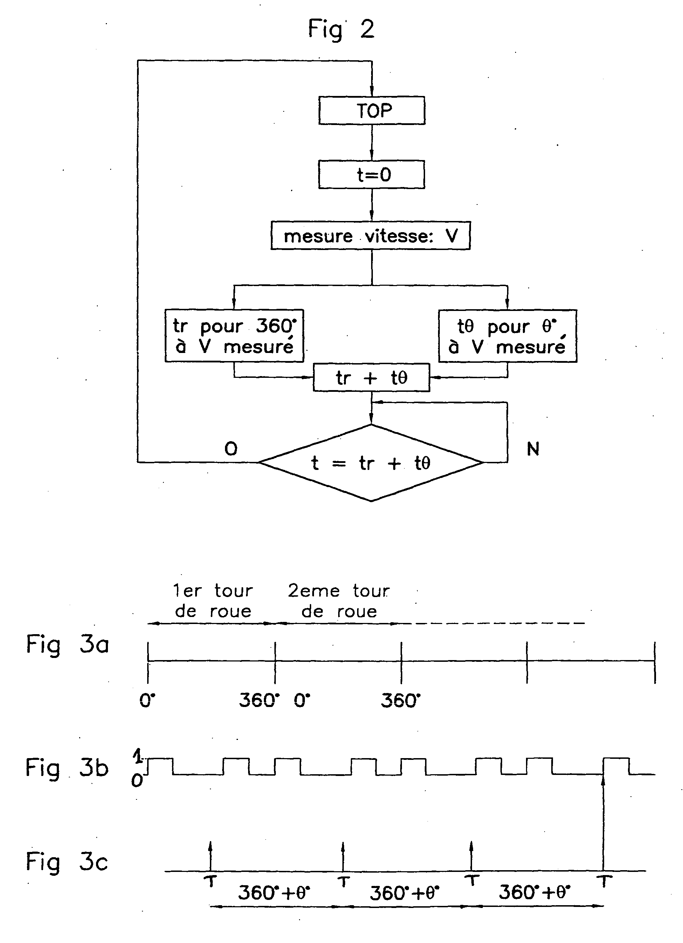

L'existence de ces zones de non réception ressort de l'analyse des figures 3a et 3b qui illustrent les résultats de mesures de réception, par un boîtier électronique monté sur une roue avant droite d'un véhicule, des signaux électromagnétiques émis de façon périodique par une antenne montée sur la poignée de la porte avant droite de ce véhicule. En vue de cette illustration, ces figures représentent respectivement, en projection sur un axe horizontal :

- la trajectoire parcourue par un boîtier électronique monté sur une roue, (figure 3a),
- et les zones correspondantes de non réception (niveau 0 sur la figure 3b) et de réception (niveau 1 (fig 3b)) par ce boîtier des signaux électromagnétiques émis par l'antenne.

Il ressort clairement de ces figures que le boîtier électronique objet du test effectué, se trouve, à des moments donnés, situé dans des zones de non réception des signaux émis par l'antenne chargée d'émettre les signaux de requête d'identification à destination du dit boîtier.

De ce fait la réception des signaux d'identification par les boîtiers électroniques devient hypothétique, et il est impossible de maîtriser lé temps nécessaire pour effectuer une procédure complète de localisation des roues, voire même de garantir l'aboutissement de cette procédure.

La présente invention vise à pallier cet inconvénient et a pour principal objectif de fournir un procédé de transmission très performant en termes de réactivité et de fiabilité.

A cet effet, l'invention vise un procédé de transmission d'un signal électromagnétique de requête d'identification généré au moyen d'une antenne connectée à une unité centrale montée sur un véhicule, à destination d'un boîtier électronique monté sur une roue du dit véhicule, ce procédé de transmission :

- consistant à émettre successivement, après démarrage du véhicule, une pluralité de signaux identiques (S1..., Si, Si+1,...) de requête d'identification
- et se **caractérisant en ce qu'**il consiste, après chaque émission à un instant $T_i$ d'un signal $S_i$ :

  - à mesurer la vitesse de déplacement V du véhicule et à calculer le temps $T_r$ d'une rotation complète de la roue pour la dite vitesse V,
  - et à déclencher le signal suivant $S_{i+1}$ à un instant $T_{i+1}$ tel que $T_{i+1} = T_i + nT_r + T_\theta$ avec n entier $\geq 1$ et $0 < T_\theta < T_r$.

Il est à noter que selon l'invention, par signal électromagnétique, on entend englober de façon générale les signaux basse fréquence « LF » et les signaux radiofréquences « RF ».

Le procédé de transmission selon l'invention permet de s'affranchir des problèmes posés par les zones de non réception grâce à des déclenchements des signaux électromagnétiques synchronisés avec la vitesse V du véhicule et surtout décalés, entre deux transmissions, d'un laps de temps de durée donnée $T_\theta$ inférieure au temps de rotation complet de la dite roue.

Un tel procédé qui allie une « synchronisation additionnée d'un décalage » conduit en effet à décaler, entre deux déclenchements successifs d'un signal de requête d'identification, la position angulaire relative d'un boîtier électronique par rapport à l'antenne émettrice associée au dit boîtier, et garantit ainsi, de façon régulière et avec une fréquence élevée, un positionnement de ce boîtier électronique dans une zone de réception, et par conséquent un aboutissement rapide de la procédure de localisation. En effet en décalant angulairement l'instant auquel on émet le signal, le boîtier électronique se retrouvera plus rapidement dans une zone de réception et ne restera pas constamment dans une zone de non réception.

De plus, un tel procédé ne nécessite, en vue de sa mise en oeuvre, que la mesure d'une seule donnée qui consiste dans la vitesse du véhicule. Or ce paramètre est actuellement mesuré et disponible sur le réseau de connexion inter calculateurs montés sur tous les véhicules, de sorte que la mise en oeuvre du procédé selon l'invention ne nécessite qu'une adaptation logicielle des procédures de localisation de roues actuelles.

Enfin, le procédé de transmission selon l'invention occultant le problème des zones de non réception, il permet de garantir une localisation rapide des roues d'un véhicule en utilisant, en vue de l'émission des signaux de requête d'identification, les antennes du dispositif d'accès mains libres équipant ce véhicule.

Selon un mode de mise en oeuvre avantageux de l'invention, on utilise, en vue de la détermination de chaque intervalle de temps $(T_{i+1} - T_i)$ séparant deux déclenchements de signaux successifs, une valeur $T_\theta$ variable, fonction de la vitesse de déplacement mesurée V du véhicule, et telle que $T_\theta = k\, T_r$, avec $0 < k < 1$.

Ce mode de mise en oeuvre qui consiste à synchroniser la duré du décalage $T_\theta$ avec la vitesse V de déplacement du véhicule conduit, en effet, à l'obtention d'un échantillonnage angulaire précis qui optimise la procédure selon l'invention.

De plus, de façon avantageuse selon l'invention; on utilise une valeur $\theta$ telle que : $T_\theta = k\, T_r$ avec $0 < k < .0{,}05$.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

- la figure 1 est une vue de dessus schématique d'un véhicule doté d'un système de surveillance comportant un dispositif de localisation des roues du dit véhicule mettant en oeuvre le procédé de transmission selon l'invention,
- la figure 2 est un algorithme représentant les étapes du procédé de transmission selon l'invention,
- et les figures 3a à 3c sont trois graphiques destinés à illustrer le procédé de transmission mis en oeuvre conformément à l'invention.

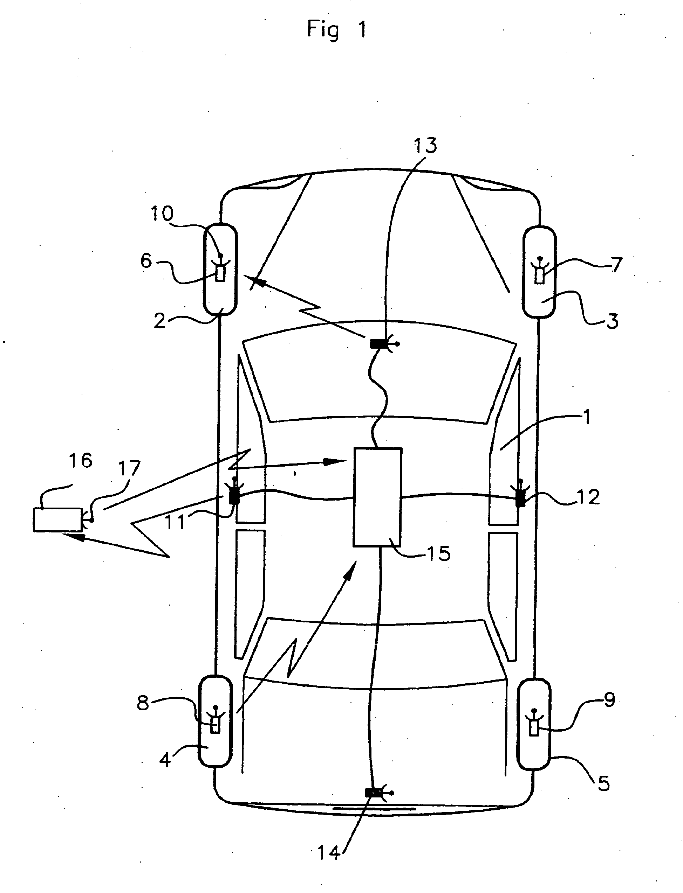

Le système de surveillance mettant en oeuvre le procédé de transmission selon l'invention est représenté, sur la figure 1, monté sur un véhicule 1 muni de quatre roues chaussées classiquement d'un pneumatique : deux roues avant 2, 3 et deux roues arrière 4, 5.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre par exemple des capteurs dédiés à la mesure de paramètres, tels que pression et/ou température du pneumatique, connectés à un microprocesseur possédant un code d'identification du dit boîtier, et relié à un émetteur RF connecté à une antenne telle que 10 basse fréquence.

Le système de surveillance comprend, également, un calculateur centralisé ou unité centrale 15 comportant un microprocesseur et intégrant un récepteur RF apte à recevoir les signaux émis par chacun des quatre boîtiers électroniques 6-9, et connecté, à cet effet, à une antenne (non représentée).

De façon usuelle, un tel système de surveillance et notamment son unité centrale 15 sont conçus de façon à informer le conducteur de toute variation anormale des paramètres mesurés par les capteurs associés aux roues 2-5.

Le dispositif de surveillance selon l'invention comprend également des antennes émettrices 11-14 connectées à l'unité centrale 15 et constituées des antennes d'un dispositif usuellement connu sous l'appellation « dispositif mains libres », adapté pour permettre d'accéder au véhicule 1 et de démarrer ce dernier grâce à l'identification d'un badge électronique 16.

Conformément aux dispositions d'un tel dispositif d'accès mains libres, ces antennes sont au nombre de quatre et consistent respectivement en :

- une antenne gauche 11 positionnée sur la poignée de la porte avant gauche du véhicule,
- une antenne droite 12 positionnée sur la poignée de la porte avant droite du véhicule,
- une antenne avant 13 positionnée au niveau du tableau de bord du véhicule,
- et une antenne arrière 14 positionnée sur la poignée de la porte du coffre du véhicule.

Le badge électronique 16, de ce système d'accès mains libres comprend, quant à lui, classiquement un calculateur intégrant un récepteur basse fréquence « LF » et un émetteur radio fréquence « RF » connectés à des antennes telles que 17.

De façon usuelle, et en vue de la localisation des roues 2-5 du véhicule 1, l'unité centrale 15 est programmée, après démarrage du dit véhicule et pour chacune des antennes 11-14 utilisées en vue de cette localisation, pour émettre n signaux électromagnétiques successifs identiques de requête d'identification S1,...Si, Si+1,...Sn.

Tel que représenté à la figure 2, le procédé de transmission de ces n signaux successifs consiste, selon l'invention, après chaque TOP, effectué à un instant Ti, d'émission d'un signal Si :

- à mesurer la vitesse de déplacement V du véhicule 1,
- à calculer, d'une part le temps Tr d'une rotation complète de la roue 2-5 pour la dite vitesse V, et d'autre part le temps Tθ mis par cette roue pour parcourir, avec la même vitesse V, un arc de θ°, avec $0 < \theta < 18°$, fonction de l'amplitude mesurée des zones de réception,
- et à déclencher le TOP d'émission du signal électromagnétique suivant Si+1 à un instant Ti+1 tel que :

$$Ti+1 = Ti + Tr + T\theta$$

Un tel procédé de transmission consiste donc à déclencher des « TOP » d'émission des signaux électromagnétiques synchronisés avec la vitesse V du véhicule et décalés lors de chaque tour de roue d'une valeur donnée Tθ également fonction de la vitesse V.

Tel que représenté à la figure 3c prise en association avec les figures 3a et 3b, lorsqu'un TOP (T fig 3c) d'émission d'un signal électromagnétique intervient alors que le boîtier électronique de la roue concernée est situé dans une zone de non réception (ce qui correspond aux trois premiers TOP représentés à la figure 3c), cette « synchronisation additionnée d'un décalage » garantit rapidement (au quatrième TOP fig 3c) le déclenchement de signaux délivrés alors que ce boîtier se trouve dans une zone de réception, et, par conséquent, garantit la réception par le dit boîtier d'un signal de requête d'identification et l'émission en retour par ce dernier de son code d'identification.

Le principe de l'invention réside dans le fait qu'en décalant l'émission du TOP T d'une valeur θ° (fonction de la vitesse de déplacement du véhicule) à chaque tour de roue, il est possible de sortir rapidement de la zone de non réception de cette roue au lieu d'y rester constamment lorsque le TOP est malencontreusement situé dans une zone de non réception et qu'aucune action de décalage n'est entreprise.

Ainsi, le procédé de transmission selon l'invention garantit une localisation rapide des roues d'un véhicule en utilisant, en vue de l'émission des signaux de requête d'identification, les antennes du dispositif d'accès mains libres équipant ce véhicule.

**Revendications**

**1.** Procédé de transmission d'un signal électromagnétique de requête d'identification généré au moyen d'une antenne (11-14) connectée à une unité centrale (15) montée sur un véhicule (1), à destination d'un boîtier électronique (6-9) monté sur une roue (2-5) du dit véhicule, ce procédé de transmission consistant à émettre successivement, après démarrage du véhicule (1), une pluralité de signaux identiques (S1..., Si, Si+1,...) de requête d'identification, et le dit procédé de transmission se **caractérisant en ce qu'**il consiste, après chaque émission à un instant Ti d'un signal Si :

• à mesurer la vitesse de déplacement V du véhicule (1) et à calculer le temps Tr d'une rotation complète de la roue (2-5) pour la dite vitesse V,
• et à déclencher le signal suivant Si+1 à un instant Ti+1 tel que Ti+1 = Ti + nTr + Tθ avec n entier $\geq 1$ et $0 < T\theta < Tr$.

**2.** Procédé de transmission selon la revendication 1 **caractérisé en ce que** l'on utilise, en vue de la détermination de chaque intervalle de temps (Ti+1 - Ti) séparant deux déclenchements de signaux successifs, une valeur Tθ variable, fonction de la vitesse de déplacement mesurée V du véhicule (1), et telle que Tθ = k Tr avec 0 < k < 1.

3. Procédé de transmission selon la revendication 2 **caractérisé en ce que** l'on utilise une valeur θ telle que : Tθ = k Tr avec 0 <k < 0,05.

## Claims

1. Method of transmitting an electromagnetic identification request signal, generated by means of an antenna (11-14) connected to a central unit (15) mounted on a vehicle (1), to an electronic housing (6-9) mounted on a wheel (2-5) of said vehicle, this transmission method consisting in successively transmitting, after starting of the vehicle (1), a plurality of identical identification request signals (S1..., Si, Si+1,...), and said transmission method being **characterised in that** it consists, after each transmission at an instant Ti of a signal Si:

   • in measuring the speed of travel V of the vehicle (1) and in calculating the time Tr of a complete rotation of the wheel (2-5) for said speed V,
   • and in triggering the following signal Si+1 at an instant Ti+1 such that $Ti+1=Ti+nTr+T\theta$ with n integer $\geq$ 1 and $0<T\theta<Tr$.

2. Transmission method according to claim 1, **characterised in that**, with a view to determining each time interval (Ti+1-Ti) separating two successive signal triggerings, a variable value Tθ is used, dependent on the measured speed of travel V of the vehicle (1), and such that $T\theta=k$ Tr with $0<k<1$.

3. Transmission method according to claim 2, **characterised in that** a value θ is used such that: $T\theta=k$ Tr with $0<k<0.05$.

## Patentansprüche

1. Verfahren zur Übertragung eines elektromagnetischen Identifikationsanfragesignals, das mittels einer Antenne (11-14) erzeugt wird, die mit einer Zentraleinheit (15) verbunden ist, die an einem Fahrzeug (1) angebracht ist, auf eine an einem Fahrzeugrad (2 bis 5) angebrachte elektronische Einheit (6 bis 9), wobei das Übertragungsverfahren darin besteht, nach dem Starten des Fahrzeugs (1) nacheinander mehrere identische Identifikationsanfragesignale (S1..., Si, Si+1,...) zu übertragen, und wobei das Übertragungsverfahren **dadurch gekennzeichnet ist, dass** es darin besteht, nach jeder Übertragung eines Signals Si zu einem Zeitpunkt Ti:

die Fahrgeschwindigkeit V des Fahrzeugs (1) zu messen und die Dauer Tr einer vollständigen Umdrehung des Rads (2 bis 5) bei der Geschwindigkeit V zu berechnen,
und das Folgesignal Si+1 zu einem Zeitpunkt Ti+1 auszulösen, sodass $Ti+1 = Ti + nTr + T\theta$, wobei n eine ganze Zahl $\geq$ 1 und $0 < T\theta < Tr$.

2. Übertragungsverfahren nach Anspruch 1, **dadurch gekennzeichnet, dass** zur Bestimmung jedes Zeitintervalls (Ti+1 - Ti) zwischen der Auslösung von zwei aufeinanderfolgenden Signalen ein variabler Wert Tθ verwendet wird, der von der gemessenen Fahrgeschwindigkeit V des Fahrzeugs (1) abhängt, und dass $T\theta = k$ Tr, wobei $0 < k < 1$.

3. Übertragungsverfahren nach Anspruch 2, **dadurch gekennzeichnet, dass** ein Wert θ wie $T\theta = k$ Tr verwendet wird, wobei $0 < k < 0,05$.

## Fig 1

## Fig 2

```
        ┌──────────────────────────────────┐
        │            ┌─────────┐           │
        │            │   TOP   │           │
        │            └────┬────┘           │
        │                 ↓                │
        │            ┌─────────┐           │
        │            │   t=0   │           │
        │            └────┬────┘           │
        │                 ↓                │
        │        ┌──────────────────┐      │
        │        │ mesure vitesse: V│      │
        │        └────────┬─────────┘      │
        │     ┌───────────┼────────────┐   │
        │     ↓                        ↓   │
        │ ┌────────────┐        ┌────────────┐
        │ │ tr pour 360°│       │ tθ pour θ° │
        │ │ à V mesuré  │       │ à V mesuré │
        │ └──────┬──────┘       └──────┬─────┘
        │        └──→ ┌─────────┐ ←────┘
        │            │ tr + tθ │
        │            └────┬────┘
        │                 ↓
        │     O      ╱─────────────╲    N
        └───────────⟨  t = tr + tθ  ⟩
                     ╲─────────────╱
```

tr pour 360° à V mesuré

tθ pour θ° à V mesuré

tr + tθ

t = tr + tθ

O      N

1er tour de roue     2eme tour de roue

**Fig 3a**

0°     360° 0°     360°

**Fig 3b**

1
0

**Fig 3c**

T    360°+θ°    T    360°+θ°    T    360°+θ°    T

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2865589
- WO 02051654 A